(19) 

**Europäisches Patentamt**

**European Patent Office**

**Office européen des brevets**

(11) **EP 4 411 589 A1**

(12) **EUROPEAN PATENT APPLICATION**

published in accordance with Art. 153(4) EPC

(43) Date of publication:
**07.08.2024 Bulletin 2024/32**

(21) Application number: **22876003.9**

(22) Date of filing: **21.09.2022**

(51) International Patent Classification (IPC):
*G06F 40/56* (2020.01)          *G06F 16/783* (2019.01)
*G06F 40/44* (2020.01)

(52) Cooperative Patent Classification (CPC):
**G06F 16/783; G06F 40/44; G06F 40/56**

(86) International application number:
**PCT/JP2022/035263**

(87) International publication number:
**WO 2023/054136 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.10.2021   JP 2021162960**

(71) Applicants:
• **OMRON Corporation
Kyoto 600-8530 (JP)**
• **Kyoto University
Kyoto-shi, Kyoto 606-8501 (JP)**

(72) Inventors:
• **HASHIMOTO, Atsushi
Tokyo 113-0033 (JP)**
• **USHIKU, Yoshitaka
Tokyo 113-0033 (JP)**
• **MORI, Shinsuke
Kyoto-shi, Kyoto 606-8501 (JP)**
• **KAMEKO, Hirotaka
Kyoto-shi, Kyoto 606-8501 (JP)**
• **NISHIMURA, Taichi
Kyoto-shi, Kyoto 606-8501 (JP)**

(74) Representative: **SONN Patentanwälte GmbH & Co
KG
Riemergasse 14
1010 Wien (AT)**

(54) **DESCRIPTION GENERATION DEVICE, METHOD, AND PROGRAM**

(57)      An acquisition unit (30) acquires, for a work including a plurality of steps, a material feature quantity representing each material used in the task, and a video feature quantity extracted from each clip, which is a video of each step in which the task is captured. An updating unit (40) identifies an action for a material included in the clip based on the video feature quantity of each clip, and updates the material feature quantity of the identified material in accordance with the identified action. A generation unit (50) generates a sentence explaining a task procedure for each of the steps based on the updated material feature quantity, the specified action, and the video feature quantity.

EP 4 411 589 A1

# FIG.3

CORRECT
ANSWER
SENTENCES

MATERIAL LIST
CLIP SERIES

10

60

30

ACQUIRING SECTION

40

TRAINING
SECTION

UPDATING SECTION

50

GENERATING SECTION

DESCRIPTION

**Description**

Technical Field

The present disclosure relates to a description generation device, a description generation method and a description generation program.

Background Art

There have conventionally been proposed techniques that, by utilizing a model such as a neural network or the like, comprehend information that relates to a task such as a cooking recipe, the assembling of parts, or the like. For example, there has been proposed a model that, from information relating to a task and described in sentences (text data), simulates changes in entities that are due to actions and comprehends the sentences (refer to Non-Patent Document 1). Further, there has been proposed a technique in which, when a video having plural event segments that are ordered temporally is provided, generates a coherent paragraph describing the entire video from plural sentences that describe the contents of the respective segments (refer to Non-Patent Document 2).

Prior Art Documents

Non-Patent Documents

Non-Patent Document 1: Antoine Bosselut, Omer Levy, Ari Holtzman, Corin Ennis, Dieter Fox, Yejin Choi, "SINIULATING ACTION DYNAMICS WITH NEURAL PROCESS NETWORKS", ICLR2018.
Non-Patent Document 2: Jie Lei, Liwei Wang, Yelong Shen, Dong Yu, Tamara L. Berg, Mohit Bansal, "MART: Memory-Augmented Recurrent Transformer for Coherent Video Paragraph Captioning", arXiv:2005.05402v1 [cs.CL] 11 May 2020.

SUMMARY OF INVENTION

Technical Problem

However, the technique disclosed in Non-Patent Document 1 is premised on comprehending sentences from text data, and therefore, cannot be applied to techniques that generate, from a video that captures a task, sentences that describe the procedures of that task. Further, although the technique disclosed in Non-Patent Document 2 is a technique that generates sentences from video, the target thereof is not a video that captures a task, and therefore, application to techniques that generate sentences describing procedures of a task is difficult.

The present disclosure was made in view of the above-described points, and an object thereof is the generation, by a computer, of sentences that describe procedures of a task by computation within the computer by using a video that captures the task.

Solution to Problem

In order to achieve the above-described object, a description generation device relating to a first aspect of the present disclosure is structured to include: an acquiring section configured to acquire, for a task including plural steps, material characteristic amounts expressing respective materials used in the task, and video characteristic amounts extracted from respective videos of each of the steps that capture the task; an updating section configured to, based on the video characteristic amounts of the respective videos of each of the steps, specify actions with respect to materials that are included in the videos of each of the steps, and updates the material characteristic amounts of specified materials in accordance with specified actions; and a generating section configured to, based on the updated material characteristic amounts, the specified actions and the video characteristic amounts, generates sentences describing procedures of the task of each of the steps.

Further, the updating section may use, as the material characteristic amounts that are targets of updating, material characteristic amounts that are updated with respect to a video of a previous step, in chronological order, of the steps in the task.

Further, the updating section may carry out at least one of addition, deletion or merging of material characteristic amounts with respect to the updated material characteristic amounts.

Further, the updating section may specify actions from video characteristic amounts, and update the material characteristic amounts by using a first model that has been trained in advance so as to update the material characteristic amounts based on of specified actions, and the generating section may generate the sentences by using a second model that has been trained in advance so as to generate sentences describing procedures of the task for each of the steps, based on material characteristic amounts, actions and video characteristic amounts.

Further, the description generation device relating to the first aspect may be structured to include a training section that trains the first model and the second model by using, as training data, a material list and videos for each of the steps, and sentences of correct answers that correspond to the material list and the videos for each of the steps.

Further, the training section may train the first model and the second model so as to minimize a total loss that includes a first loss, which is based on comparison of sentences generated by the generating section and the sentences of the correct answers, and a second loss, which is based on comparison of the actions and the material characteristic amounts specified at the updating section and actions and materials of correct answers included in the videos for each of the steps.

Further, the training section may acquire the actions and the materials of the correct answers by carrying out language analysis on the sentences of the correct answers.

Further, the training section may train the first model, the second model and a third model so as to minimize the total loss, which further includes a third loss that is based on a comparison of output of the third model, which has been trained in advance so as to estimate material characteristic amounts and actions from sentences generated by the generating section, and the actions and the materials of the correct answers.

Further, a description generation method relating to a second aspect of the present disclosure is a method in which an acquiring section acquires, for a task including plural steps, material characteristic amounts expressing respective materials used in the task, and video characteristic amounts extracted from respective videos of each of the steps that capture the task, and, based on the video characteristic amounts of the respective videos of each of the steps, an updating section specifies actions with respect to materials that are included in the videos of each of the steps, and updates the material characteristic amounts of specified materials in accordance with specified actions, and a generating section generates sentences describing procedures of the task for each of the steps, based on the updated material characteristic amounts, the specified actions and the video characteristic amounts.

Further, a description generation program relating to a third aspect of the present disclosure is a program for causing a computer to function as: an acquiring section acquiring, for a task including plural steps, material characteristic amounts expressing respective materials used in the task, and video characteristic amounts extracted from respective videos of each of the steps that capture the task; an updating section that, based on the video characteristic amounts of the respective videos of each of the steps, specifies actions with respect to materials that are included in the videos of each of the steps, and updates the material characteristic amounts of specified materials in accordance with specified actions; and a generating section that, based on the updated material characteristic amounts, the specified actions and the video characteristic amounts, generates sentences describing procedures of the task for each of the step.

Advantageous Effects of Invention

In accordance with the description generation device, method and program relating to the present disclosure, sentences that describe procedures of a task can be generated from a video that captures that task.

BRIEF DESCRIPTION OF DRAWINGS

Fig. 1 is a drawing for explaining a summary relating to a present embodiment.
Fig. 2 is a block drawing illustrating hardware structures of a description generation device.
Fig. 3 is a block drawing illustrating an example of functional structures of the description generation device.
Fig. 4 is a drawing for explaining a summary of the respective functional structures, and flows of data between the functional structures.
Fig. 5 is a drawing for explaining acquisition of material vectors.
Fig. 6 is a drawing for explaining acquisition of video vectors.
Fig. 7 is a drawing for explaining a state estimator of an updating section.
Fig. 8 is a drawing for explaining a description generator of a generating section.
Fig 9 is a drawing for explaining a re-estimator of a training section.
Fig. 10 is a drawing for explaining computing of losses.
Fig. 11 is a flowchart illustrating the flow of training processing.
Fig. 12 is a flowchart illustrating the flow of generating processing.

Fig. 13 is a drawing illustrating results of comparison of performances of methods of the present disclosure and reference methods.

Fig. 14 is a drawing illustrating an example of results of generating description from a recipe video.

Fig. 15 is a drawing illustrating an example of plotting material vectors in a vector space.

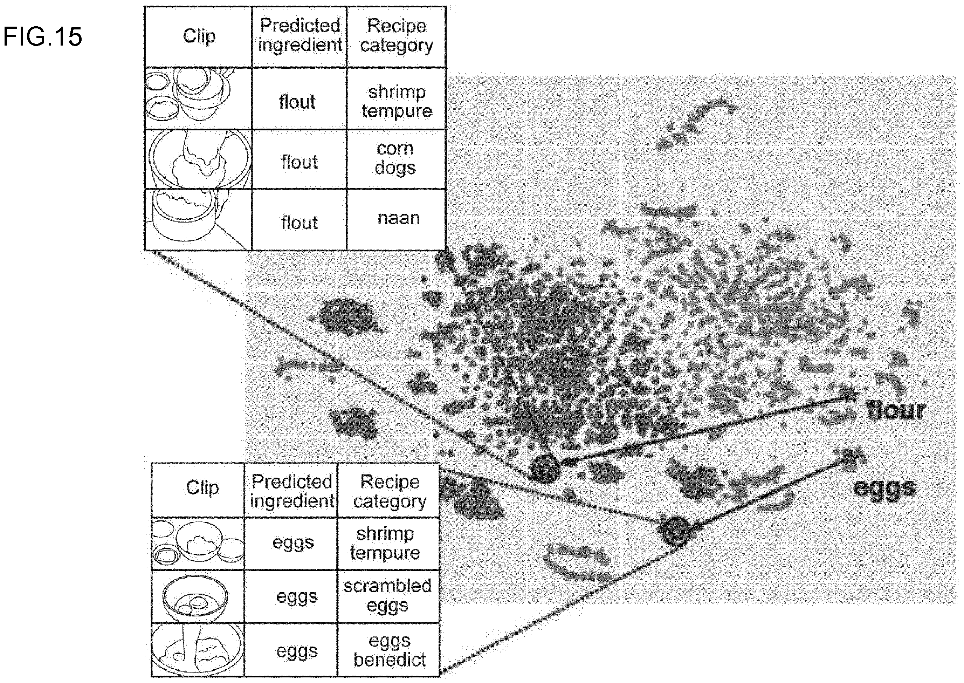

Fig. 15 is a drawing illustrating an example of addition/subtraction of material vectors.

DESCRIPTION OF EMBODIMENTS

An example of an embodiment of the present disclosure is described hereinafter with reference to the drawings. Note that, in the respective drawings, the same reference numerals are applied to structural elements and portions that are the same or equivalent. Further, dimensions and ratios in the drawings are exaggerated for convenience of explanation, and there are cases in which they differ from actual ratios.

First, a summary of a description generation device relating to a present embodiment is described.

The description generation device relating to the present embodiment generates sentences that describe procedures of a task from a series of portions of a video that are obtained by dividing, of each of the step, the video that captures a task including the plural steps, and a material list that lists-up the materials that are used in that task. Hereinafter, the portion of the video of each of the step is called a "clip", the series of clips is called the "clip series", and the sentences that describe the procedures of the task are called the "description". By using a network model that expresses the processes of the task as state changes, the description generation device relating to the present embodiment trains a model obtained by using characteristic amounts expressing intermediate states of the materials, without using labels expressing the states.

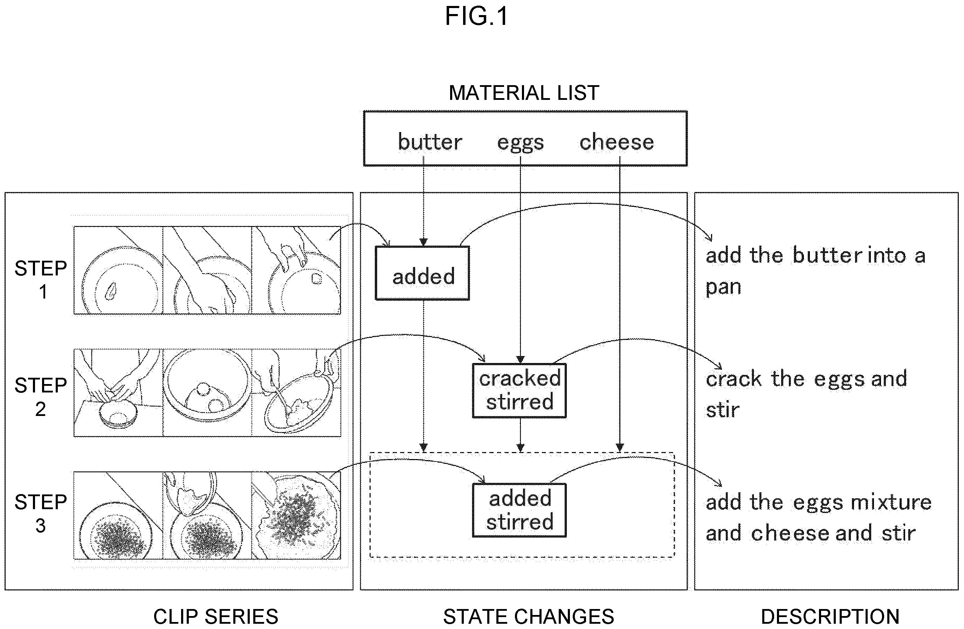

Specifics are described hereinafter with reference to Fig. 1. In the example of Fig. 1, the task includes steps 1 through 3, and the material list includes "butter", "eggs" and "cheese". The description generation device specifies actions with respect to the materials, from the respective clips. In the example of Fig. 1, the action "add" with respect to the material "butter" is specified from the clip of step 1. Further, the action "cracked" and the action "stirred" with respect to the material "eggs" are specified from the clip of step 2. Moreover, the action "add" and the action "stirred" with respect to the materials "butter", "eggs" and "cheese" are specified from the clip of step 3.

The description generation device generates characteristic amounts, which express intermediate states of the materials, by updating the characteristic amounts of the materials based on the specified actions. For example, the description generation device generates a characteristic amount, which expresses an intermediate state such as "added butter", by updating the characteristic amount of the material "butter" based on the action "add". Then, the description generation device generates a description of each of the step based on the characteristic amounts of the respective clips, the actions specified from the respective clips, and the updated characteristic amounts of the materials.

The description generation device relating to the present embodiment is described in detail hereinafter. In the following detailed description as well, when describing specific examples, description is given by using an example in which the task includes steps 1 through 3, and "butter", "eggs" and "cheese" are included in the material list, in the same way as in the example of Fig. 1. Note that image data of the materials, and IDs representing the materials, may be included in the material list.

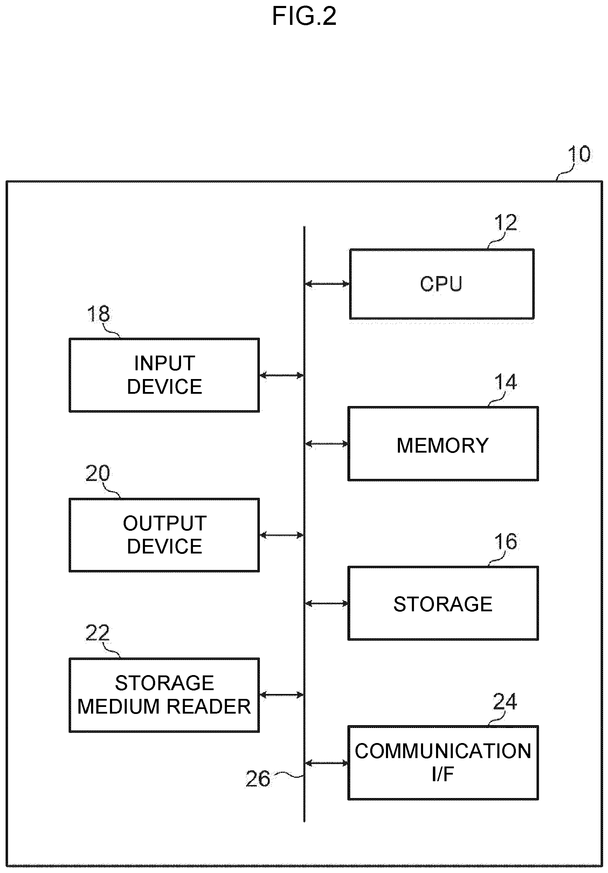

Fig. 2 is a block drawing illustrating hardware structures of a description generation device 10 relating to the present embodiment. As illustrated in Fig. 2, the description generation device 10 has a CPU (Central Processing Unit) 12, a memory 14, a storage 16, an input device 18, an output device 20, a storage medium reader 22, and a communication I/F (Interface) 24. The respective structures are connected via bus 26 so as to be able to communicate with one another.

A description generation program for executing training processing and generating processing that are described later is stored in the storage 16. The CPU 12 is a central computing processing unit, and executes various programs and controls respective structures. Namely, the CPU 12 reads-out a program from the storage 16 and executes the program by using the memory 14 as a workspace. In accordance with programs that are stored in the storage 16, the CPU 12 carries out control of the above-described respective structures, and various computing processings.

The memory 14 is structured by a RAM (Random Access Memory), and temporarily stores programs and data as a workspace. The storage 16 is structured by a ROM (Read Only Memory) and an HDD (Hard Disk Drive), an SSD (Solid State Drive) or the like, and stores various programs, including the operating system, and various data.

The input device 18 is a device, such as a keyboard and a mouse or the like for example, for carrying out various types of input. The output device 20 is a device, such as a display or a printer or the like, for outputting various information. By employing a touch panel display therefor, the output device 20 may be made to function as the input device 18. The storage medium reader 22 carries out reading of data stored on various storage media such as a CD (Compact Disc) -ROM, a DVD (Digital Versatile Disc) -ROM, a Blu-ray disc, a USB (Universal Serial Bus) memory or the like, and writing of data to storage media, and the like. The communication I/F 24 is an interface for communicating with other equipment, and standards such as, for example, Ethernet®, FDDI, Wi-Fi® or the like are used.

Functional structures of the description generation device 10 relating to the present embodiment are described next.

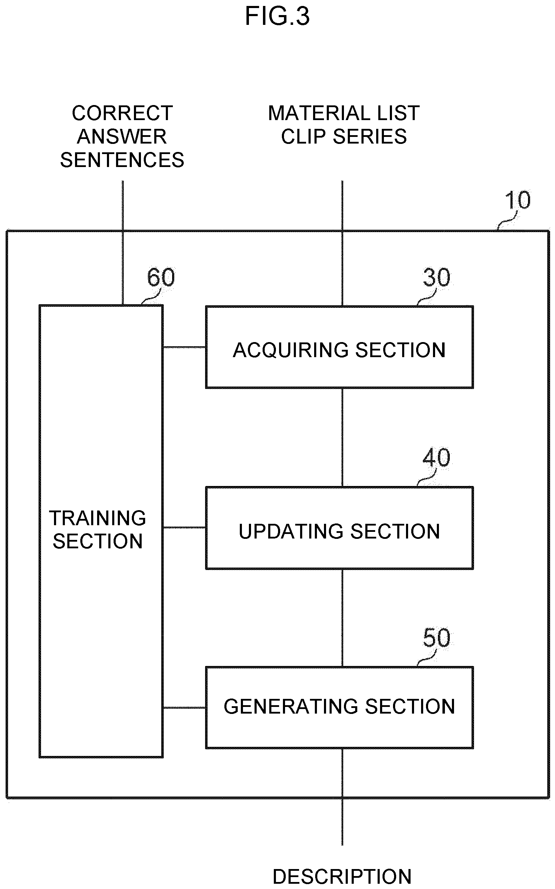

Fig. 3 is a block drawing illustrating an example of functional structures of the description generation device 10. As illustrated in Fig. 3, the description generation device 10 includes, as the functional structures thereof, an acquiring section 30, an updating section 40, a generating section 50, and a training section 60. The respective functional structures are realized by the CPU 12 reading-out the description generation program that is stored in the storage 16, and expanding and executing the program in the memory 14.

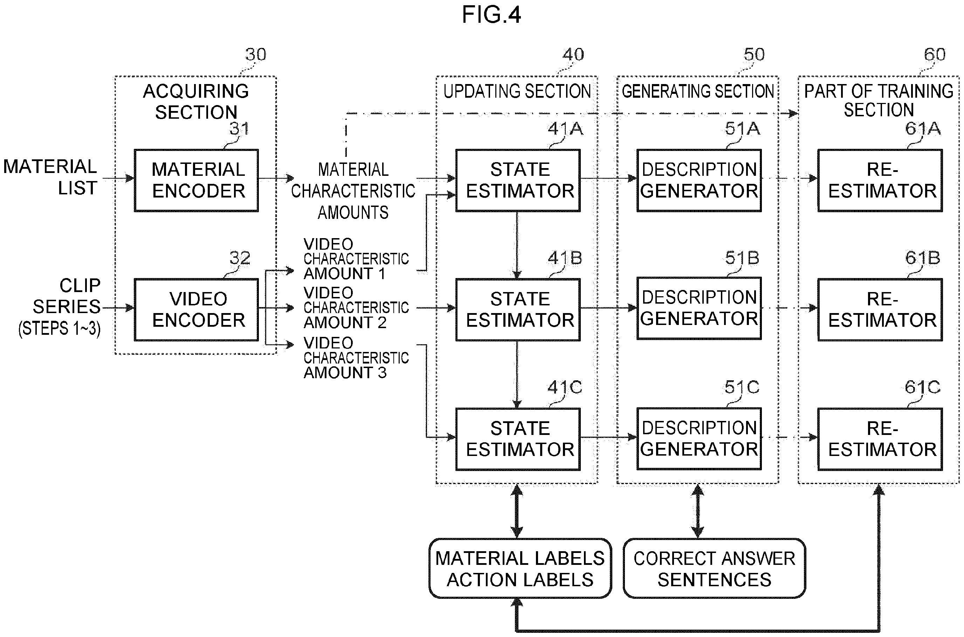

Here, a summary of the respective functional structures, and flows of data between the functional structures, are described with reference to Fig. 4, and thereafter, the respective functional structures are described in detail. In Fig. 4, the solid arrows show the flows of data at both times of training and times of generating description, the one-dot chain line arrows show the flows of data generated only at times of training, and the thick arrows show portions relating to computing the losses at times of training.

The acquiring section 30 includes a material encoder 31 and a video encoder 32. The acquiring section 30 inputs a material list that is text data to the material encoder 31, and acquires material characteristic amounts expressing the respective materials that are described in the material list. Further, the acquiring section 30 inputs respective clips that are included in a clip series to the video encoder 32, and acquires video characteristic amounts extracted from the respective clips. Fig. 4 illustrates an example in which video characteristic amount 1 is acquired from the clip of step 1, video characteristic amount 2 is acquired from the clip of step 2, and video characteristic amount 3 is acquired from the clip of step 3. The acquiring section 30 transfers the acquired material characteristic amounts and video characteristic amounts to the updating section 40.

The updating section 40 includes state estimators 41A, 41B, 41C of a number corresponding to the number of steps included in the task. In the example of Fig. 4, the state estimator 41A corresponds to step 1, the state estimator 41B corresponds to step 2, and the state estimator 41C corresponds to step 3. Hereinafter, when describing the respective state estimators 41A, 41B, 41C without differentiating therebetween, they are simply called "state estimator 41". On the basis of the video characteristic amounts of a clip, the state estimator 41 specifies the actions with respect to the materials included in that clip, and updates the material characteristic amounts of the specified materials in accordance with the specified actions. The updating section 40 acquires the actions specified at the respective state estimators 41 and the updated state characteristic amounts, and transfers this data to the generating section 50 together with the video characteristic amounts.

Note that the material characteristic amounts that are the targets of updating at the state estimator 41 are the material characteristic amounts that were updated at the state estimator 41 corresponding to the previous clip in the clip series, i.e., the clip of the step before, in chronological order, of the steps of the task. Namely, the material characteristic amounts and video characteristic amounts 1 that were transferred from the acquiring section 30 are inputted to the state estimator 41A. The material characteristic amounts updated at the state estimator 41A and video characteristic amounts 2 are inputted to the state estimator 41B. The material characteristic amounts that were updated at the state estimator 41B and video characteristic amounts 3 are inputted to the state estimator 41C.

The generating section 50 includes description generators 51A, 51B, 51C of a number corresponding to the number of steps included in the task. In the example of Fig. 4, the description generator 51A corresponds to step 1, the description generator 51B corresponds to step 2, and the description generator 51C corresponds to step 3. Hereinafter, when describing the respective description generators 51A, 51B, 51C without differentiating therebetween, they are simply called "description generator 51". The description generators 51 generate descriptions of the respective steps based on the updated material characteristic amounts, the specified actions, and the video characteristic amounts that are transferred from the updating section 40. The generating section 50 joins the descriptions generated at the respective description generators 51, and outputs the joined description as a description that lays out the entire task.

The training section 60 computes loss that is based on a comparison between correct answer sentences, which present the material list and the clip series, and the description outputted from the generating section 50. Further, the training section 60 acquires material labels, which express actions with respect to the materials included in the clip, i.e., express the materials of the correct answers, and action labels that express the actions of the correct answers. The training section 60 computes the loss that is based on a comparison of, on the one hand, the acquired material labels and action labels, and on the other hand, the actions acquired at the updating section 40 and the updated material characteristic amounts.

Moreover, the training section 60 includes re-estimators 61A, 61B, 61C of a number corresponding to the number of steps included in the task. In the example of Fig. 4, the re-estimator 61A corresponds to step 1, the re-estimator 61B corresponds to step 2, and the re-estimator 61C corresponds to step 3. Hereinafter, when describing the respective re-estimators 61A, 61B, 61C without differentiating therebetween, they are simply called "re-estimator 61". The re-estimator 61 estimates the actions with respect to the materials in a step, from the material list and the description generated by the description generator 51 to which that step corresponds. The training section 60 computes a loss that is based on comparison between, on the one hand, the estimated actions with respect to the materials, and, on the other hand, the material labels and the action labels. The training section 60 trains the state estimators 41, the description generators 51 and the re-estimators 61 so as to minimize the total loss that aggregates the respective, computed losses.

The respective functional structures are described more specifically hereinafter. Note that the specific examples of the respective functional structures that are described hereinafter are examples, and methods of realizing the respective functional structures are not limited to the examples of the following specific examples.

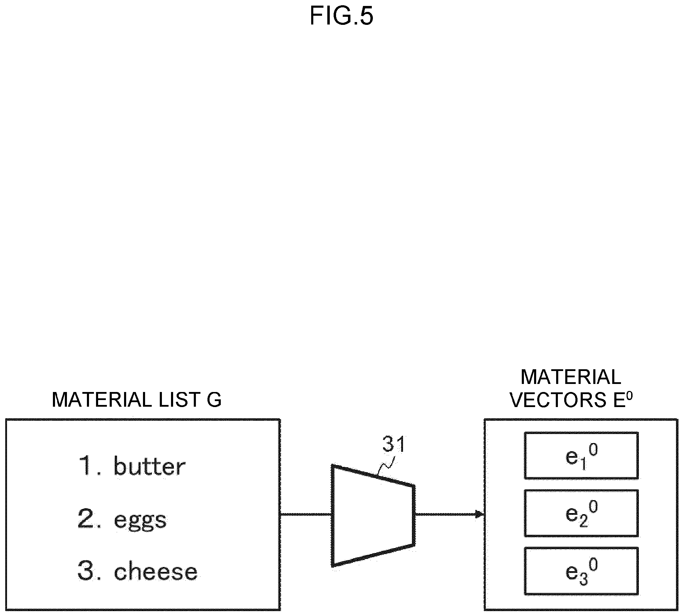

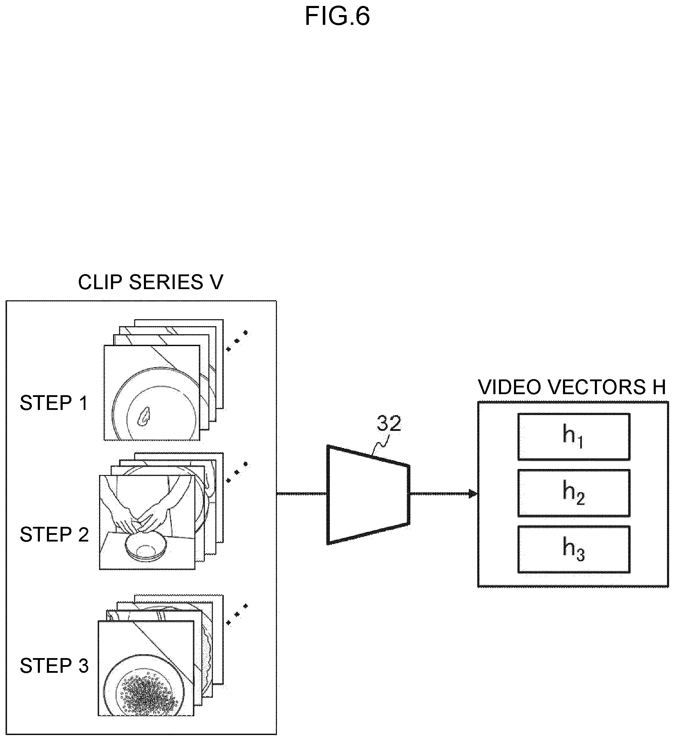

The acquiring section 30 acquires material list $G = (g1, ..., g^m, ..., g^M)$ and clip series $V = (v1, ..., v^n, ..., v^N)$. $g^m$ is a word expressing the mth material in the material list G, and M is the total number of materials included in the material list. $v^n$ is the nth clip in the clip series, and N is the total number of steps included in the task. The acquiring section 30 inputs the material list G to the material encoder 31 as illustrated in Fig. 5, and inputs the clip series V to the video encoder 32 as illustrated in Fig. 6.

The material encoder 31 is an encoder structured by a neural network that has been trained in advance in order to extract, from the material list, material characteristic amounts that express characteristics of the respective materials. For example, the material encoder 31 may be a multilayer perceptron (MLP) connected neural network having word embedding and a ReLU activation function, such as GloVe (global vectors) or the like. As illustrated in Fig. 5, the material encoder 31 makes the words $g^m$, which express the respective materials included in the material list G, into vectors by word embedding, and adds position encoding, and outputs the results as initial material vectors $E^0 = (e_1^0, ..., e_m^0, ..., e_M^0)$. In the example of the present embodiment, $E^0 = (e_1^0, e_2^0, e_3^0)$. Note that the material vectors are an example of the material characteristic amounts.

The video encoder 32 is an encoder structured by a neural network such as a transformer or the like for example, that has been trained in advance in order to extract, from the clip series, video characteristic amounts expressing content characteristics of the respective clips. Plural clips $v^n$ are included in the clip series V, and each clip $v^n$ is structured by continuous frames. Namely, the clip series V is hierarchical. Accordingly, in order to effectively encode the clip series V, the video encoder 32 may be made to be twostage transformers that are suited to the encoding of sequence data. In this case, the transformer of the first stage encodes the respective clips $v^n$ in characteristic vectors by extracting vectors corresponding to CLS tokens in BERT (Bidirectional Encoder Representations from Transformers). Further, the transformer of the latter stage is trained by the entire sequence. As illustrated in Fig. 6, the video encoder 32 outputs video vectors $H = (h1, ..., h_n, ..., h_N)$. In the example of the present embodiment, $H = (h_1, h_2, h_3)$. Note that the video vectors are an example of the video characteristic amounts.

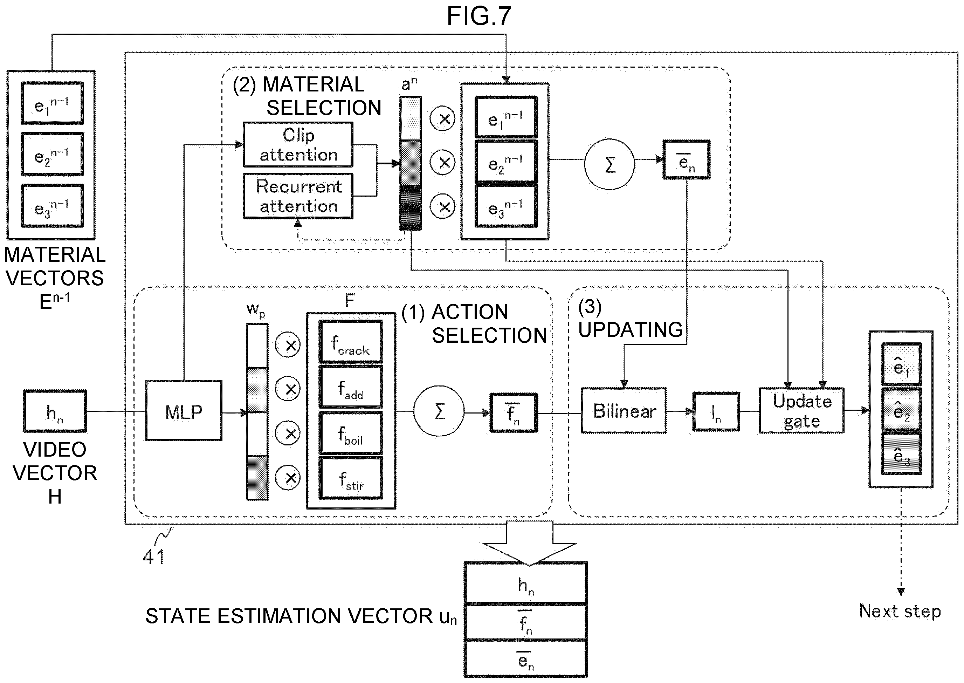

On the basis of the material vectors $E^0$ and the video vectors H, the updating section 40 repeatedly estimates the state changes of the materials in the respective steps. Specifically, as illustrated in Fig. 7, in an nth step, the updating section 40 provides video vector $h_n$ of clip $v^n$ and material vectors $E^{n-1}$ to the state estimator 41 that executes the processings of (1) action selection, (2) material selection, and (3) updating. Details of the respective processings of the state estimators 41 are described later. After the nth step, the state estimator 41 outputs state estimation vector $u_n$. The state estimation vector $u_n$ is a vector that combines the video vector $h_n$, selected actions $f_n$ and material vector $e_n$. Note that symbol " X" is shown in the drawings and the formulas as a " (macron)" over the "X". The state estimators 41 repeatedly execute the above-described processings until ending the processing of the final clip $v^N$ of the clip series V.

The respective processings of (1) action selection, (2) material section, and (3) updating of the state estimator 41 in the nth step are described in detail hereinafter.

First, the (1) action selection is described. When the video vector $h_n$ is provided thereto, the state estimator 41 selects, from action embed F that is defined in advance, the actions that are executed in the clip $v^n$. Action embed F is the vectors obtained by making words, which express actions that have been defined in advance, into vectors by word embedding. For example, in a case in which the actions "crack" and "stir" are executed in clip $v^n$, both $f_{crack}$ and $f_{stir}$ must be selected. Thus, in order to make it such that plural actions are selected, the state estimator 41 computes, from the video vector $h_n$ and by MLP for example, probabilities $w_p$ of the actions executed in the clip $v^n$ among the respective actions of the word embed F. Next, as shown by following formula (2) and formula (3), the state estimator 41 computes action vector $f_n$, which expresses the selected actions, as the weighted sum of the probabilities $w_p$ of the actions and the action embed F. Note that, in formula (1) through formula (3), MLP($\cdot$) represents a two-layer MLP having a sigmoid function, and $w_p$ is the attention distribution of an action that can be taken among the actions included in the action embed F.

[Numerical Formula 1]

$$w_p = \text{MLP}(h_n) \qquad (1)$$

$$\bar{w}_p = \frac{w_p}{\sum_j w_p^j} \qquad (2)$$

$$\bar{f}_n = \bar{w}_p^T \mathcal{F} \qquad (3)$$

The (2) material selection is described next. On the basis of the probabilities $w_p$ of the actions and the action vector $h_n$, the state estimator 41 outputs material vector $e_n$, which expresses the selected materials, by selecting the materials that are included in the clip $v^n$ from the material vectors $E^{n-1}$. For example, in the example of Fig. 1, in step 3 (n = 3), "cheese" that is an original material and the "butter" and "eggs" that have been manipulated must be selected. In this way, the state estimator 41 has two attention modules that are clip attention and recurrent attention, in order to be able to combine and select original materials and materials that have been manipulated.

Clip attention computes weight $d_m$ of the attention with respect to material vector $e_m^{n-1}$ by following formula (4) and formula (5), based on the video vector $h_n$ and the probability $w_p$ of the action. Note that, in formula (4) and formula (5), $W_1$ and $W_2$ are linear and bilinear mapping, and $b_1$ and $b_2$ are biases.

[Numerical Formula 2]

$$\hat{h}_n = \text{ReLU}(W_1 h_n + b_1) \qquad (4)$$

$$d_m = \sigma((e_m^{n-1})^T W_2 [\hat{h}_n; w_p]) \qquad (5)$$

Recurrent attention computes probability $a^n$ of a material related to the action executed in clip $v^n$ among the material vectors $E^{n-1}$ by following formula (6) and formula (7), by using the output of the clip attention, and information from both the current and previous clips. Note that, in formula (6) and formula (7), $W_3$ is linear mapping, $b_3$ is bias, c e real number $R^3$ is the selection distribution, $a_m^{n-1}$ is the weight of the attention of material vector $e_m^n$ in the previous clip $v^{n-1}$, $a_m^n$ is the final distribution of the respective material vectors, and 0 is a zero vector expressing that no material is selected.

[Numerical Formula 3]

$$c = \text{softmax}(W_3 \hat{h}_n + b_3) \qquad (6)$$

$$a_m^n = c_1 d_m + c_2 a_m^{n-1} + c_3 0 \qquad (7)$$

Next, as shown by following formula (8), the state estimator 41 computes material vector $e_n$, which expresses the selected materials, as the weighted sum of material vectors $e_m^{n-1}$ and the final distribution $a_m^n$ of the material vectors.
[Numerical Formula 4]

$$\bar{e}_n = \sum_m a_m^n e_m^{n-1}. \qquad (8)$$

The (3) updating is described next. On the basis of the selected actions and material vectors, the state estimator 41 computes updated material vectors $\hat{e}_m$ that express the state changes of the materials. Note that the symbol "^X" is shown in the drawings and the formulas as a "^ (circumflex)" over the "X". Specifically, as shown in following formula (9), the state estimator 41 computes action proposal vector $l_n$ with respect to the materials by using a bilinear transform (Bilinear) of the selected actions $f_n$ and the material vector en. Note that, in formula (9), $W_4$ is a bilinear map, and $b_4$ is the bias.
[Numerical Formula 5]

$$l_n = \mathrm{ReLU}(\bar{f}_n W_4 \bar{e}_n + b_4), \qquad (9)$$

Next, as shown by following formula (10), the state estimator 41 computes the updated material vectors $\hat{e}_m$ by interpolating the action proposal vector $l_n$ and the current material vectors $e_m^{n-1}$ based on the probabilities $a^n$ of the materials. The state estimator 41 assigns the updated material vectors $\hat{e}_m$ to the material vectors $E_m^n$, and transfers them to the (n+1)st processing that is next.
[Numerical Formula 6]

$$\hat{e}_m = a_m^n l_n + (1 - a_m^n) e_m^{n-1}. \qquad (10)$$

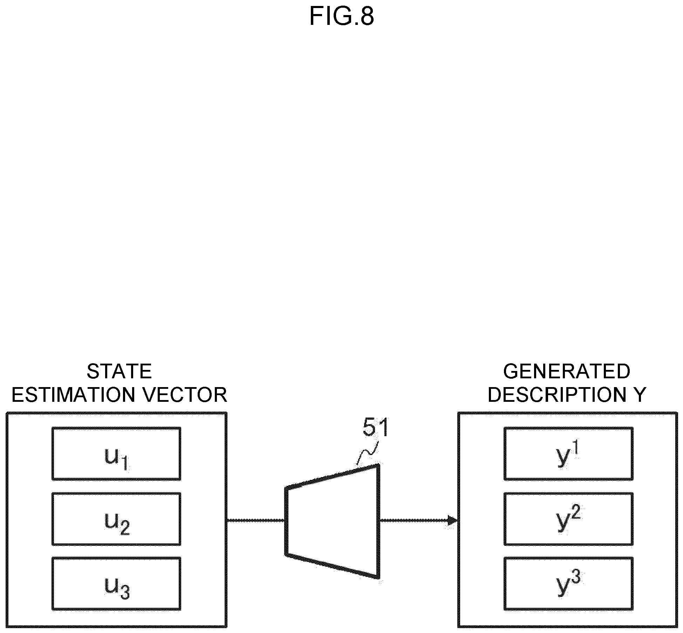

As illustrated in Fig. 8, the generating section 50 inputs the state estimation vectors $u_n$, which were outputted from the state estimator 41, to the corresponding nth description generator 51. The description generators 51 repeatedly generate description $y^n$ of each of the step from the state estimation vectors $u_n$, and generate descriptions $Y = (y^1, ..., y^n, ... y^N)$ for all of the steps. The description generators 51 may be decoders that are structured by neural networks, such as transformers or the like for example, that have been trained in advance.
Specifically, the description generator 51 has a copy mechanism in order to promote generation of a word, which expresses a material, as a word that is included in the description. At the time of generating the kth word in the description of the nth step, when the updated material vector $e_m^n \in E^n$ is provided thereto, as shown by following formula (11) and by using the copy mechanism, the description generator 51 computes attention probability $\beta_{n,k}^m$ by using the bilinear inner product of output $o_{n,k}$ of the description generator 51 and the material vector $e_m^n$ Note that, in formula (11), $W_c$ represents a bilinear map.
[Numerical Formula 7]

$$\beta_{n,k}^m = \frac{\exp\{(o_{n,k})^\mathsf{T} W_c e_m^n\}}{\sum_i \exp\{(o_{n,k})^\mathsf{T} W_c e_i^n\}}, \qquad (11)$$

Next, as shown by following formula (12), the description generator 51 computes copy gate $g_{n,k}$ ($0 \le g_{n,k} \le 1$) for selecting whether to select a material from the material list or to generate a word from a lexicon that is readied in advance. Note that, in formula (12), [·] is a concatenation function, $\sigma(\cdot)$ is a sigmoid function, $W_g$ is a linear map, and $b_g$ is bias.
[Numerical Formula 8]

$$g_{n,k} = \sigma(W_g[o_{n,k}; \sum_m \beta_{n,k}^m e_m^n] + b_g), \qquad (12)$$

Next, as shown in following formula (13), based on the copy gate $g_{n,k}$, the description generator 51 computes a final predicted word probability $P_{n,k}(w)$ as the weighted sum of the probability of copying from the material list and the probability of generating from the lexicon. Note that, in formula (13), $P_{n,k}^{voc}(w)$ represents the probability of the kth word w in the nth sentence of the lexicon, and $|g_m|$ represents the number of words of the mth material of the material list.

[Numerical Formula 9]

$$P_{n,k}(w) = (1 - g_{n,k})\, P_{n,k}^{\mathrm{voc}}(w) + g_{n,k}\left(\frac{1}{|g_m|}\sum_{i:w_i=w}\beta_{n,k}^i\right), \quad (1\,3)$$

By generating words successively based on the predicted word probability $P_{n,k}(w)$, the description generators 51 generate description $y^n$ of each of the step, and generate description Y for all of the steps.

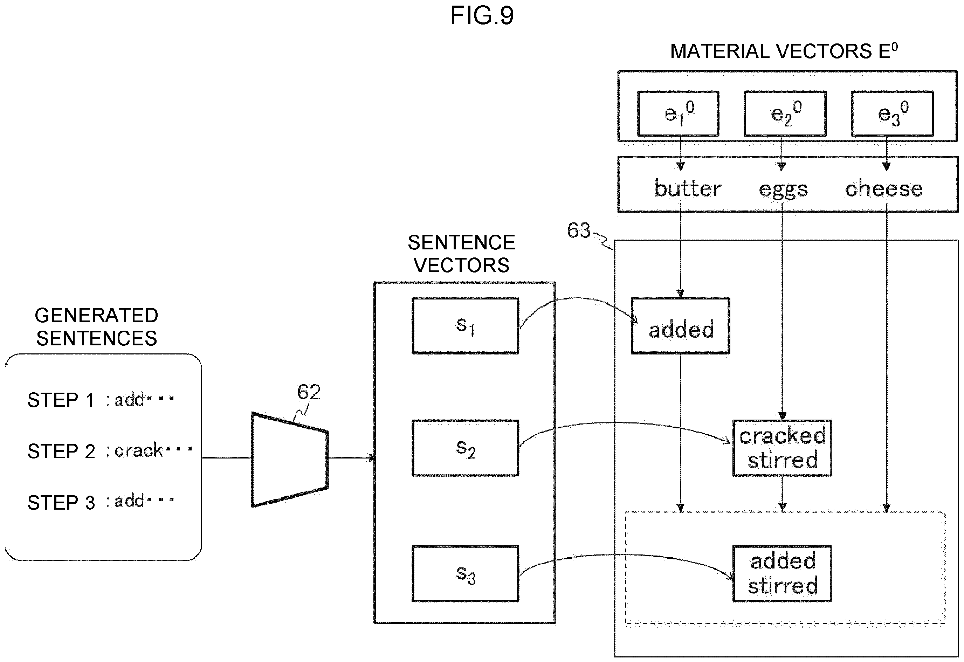

As illustrated in Fig. 9, the re-estimators 61 that are included in the training section 60 include two sub-modules that are a sentence encoder 62 and an estimator 63. The sentence encoder 62 converts the description Y generated at the generating section 50 into sentence vectors $S = (s_1, ..., s_n, ..., s_N)$ corresponding to the respective steps. Specifically, first, the sentence encoder 62 applies, for example, the straight version of Gumbel-Softmax resampling, and samples the description while maintaining a chain that can be differentiated. The sentence encoder 62 converts the sampled description into characteristic vectors by computing average vectors of the words embedded in the respective steps. The embedding of the words is shared between the description generator 51 and the sentence encoder 62. Next, by utilizing BiLSTM for example, the sentence encoder 62 converts the characteristic vectors into sentence vectors S that correspond to the respective steps.

The estimator 63 has a structure that is similar to the state estimator 41, and re-estimates the state changes of the materials based on the sentence vectors S and the initial material vectors $E^0$.

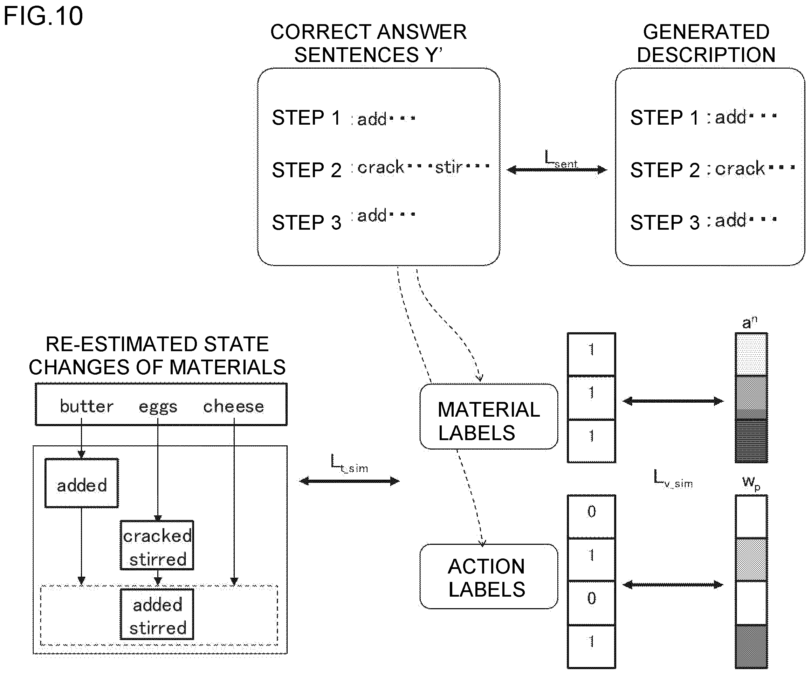

Further, as illustrated in Fig. 10, in order to train the state estimators 41, the description generators 51 and the re-estimators 61 respectively, the training section 60 computes sentence generation loss $L_{sent}$, state estimation loss $L_{v\_sim}$, and re-estimation loss $L_{t\_sim}$.

The sentence generation loss $L_{sent}$ is the loss relating to the description generator 51. Specifically, the training section 60 acquires correct answer sentences $Y' = (y'^1, ..., y'^n, ..., y'^N)$ that correspond to the material list G and the clip series V acquired by the acquiring section 30. The combination of the material list G and the clip series V on the one hand and the correct answer sentences Y' on the other hand is the training data, and the training section 60 acquires plural training data. Then, for all of the training data, the training section 60 computes, as the loss $L_{sent}$, the total of N negative loglikelihoods of the errors between the description sentences Y, which are the output with respect to the input (V,G), and the correct answer sentences Y', e.g., $|y^n - y'^n|$.

The state estimation loss $L_{v\_sim}$ is the loss relating to the state estimator 41, and is structured by the loss of the material selection and the loss of the action selection. The training section 60 carries out language analysis of the correct answer sentences and acquires, as material labels, words expressing the materials included in the correct answer sentences, and acquires, as action labels, words that are included in the correct answer sentences and whose part of speech is a verb. For example, from the correct answer sentence "crack the eggs and stir", "eggs" is acquired as a material label, and "crack" and "stir" are acquired as action labels. The training section 60 transforms the material labels into a vector that includes elements of the same number as the number of the material labels acquired from the correct answer sentences of all of the steps, and makes the values of the elements, which correspond to the material labels acquired from the correct answer sentences of the respective steps, be 1, and makes the value of elements other than these be 0. Similarly, the training section 60 transforms the action labels into a vector that includes elements of the same number as the number of the action labels acquired from the correct answer sentences of all of the steps, and makes the values of the elements, which correspond to the action labels acquired from the correct answer sentences of the respective steps, be 1, and makes the value of elements other than these be 0. The burden of preparing the material labels and the action labels manually can be reduced by acquiring the material labels and the action labels from the correct answer sentences of each of the step.

The training section 60 computes, as the loss in the material selection, the total of the negative loglikelihoods of the errors between the probabilities $a^n$ of the materials that were computed at the state estimators 41 and the material labels, e.g., the differences between the probabilities $a^n$ and the values of the elements of the corresponding material labels. Further, the training section 60 computes, as the loss in the action selection, the total of the negative loglikelihoods of the errors between the probabilities $w_p$ of the actions that were computed at the state estimators 41 and the action labels, e.g., the differences between the probabilities $w_p$ and the values of the elements of the corresponding action labels. Note that, for the action labels, because there is a large imbalance in the proportion of positive actions (actions whose value is 1) and negative actions (actions whose value is 0), the imbalance may be eliminated by using an asymmetric loss that is negative loglikelihoods that are weighted. The training section 60 computes, as the state estimation loss $L_{v\_sim}$, the sum of the loss of the material selection and the loss of the action selection.

The re-estimation loss $L_{t\_sim}$ is the loss relating to the re-estimators 61. In the same way as the above-described state estimation loss $L_{v\_sim}$, the training section 60 computes the re-estimation loss $L_{t\_sim}$ relating to the errors between the actions and the materials, which were selected at the time of estimating the state changes of the materials at the re-estimators 61, and the material labels and the action labels.

The training section 60 computes, as total loss $L_{total}$ (= $L_{sent}$ + $L_{v\_sim}$ + $L_{t\_sim}$), the total of the computed sentence generation loss $L_{sent}$, state estimation loss $L_{v\_sim}$, and re-estimation loss $L_{t\_sim}$. Then, the training section 60 trains the state estimators 41, the description generators 51 and the re-estimators 61 by, until a training end condition is satisfied, repeating the updating of the respective parameters of the state estimators 41, the description generators 51 and the re-estimators 61 so as to minimize the total loss $L_{total}$. The training end condition may be, for example, a case in which the number of times that updating of the parameters is repeated reaches a predetermined number of times, a case in which the total loss $L_{total}$ becomes less than or equal to a predetermined value, a case in which the difference between the total loss $L_{total}$ computed the previous time and the total loss $L_{total}$ computed this time becomes less than or equal to a predetermined value, or the like.

Operation of the description generation device 10 relating to the present embodiment is described next.

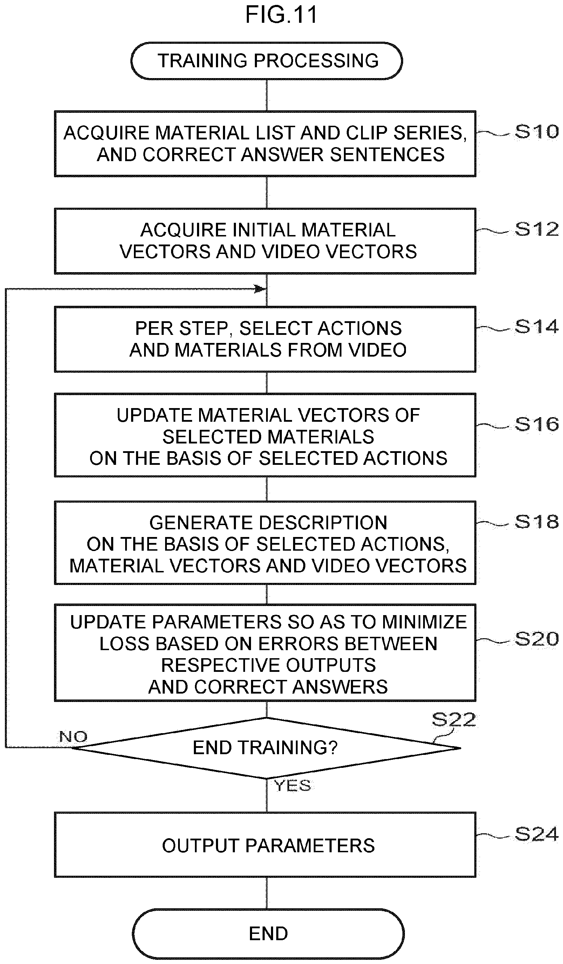

Fig. 11 is a flowchart illustrating the flow of training processing that is executed by the CPU 12 of the description generation device 10. Due to the CPU 12 reading-out the description generation program from the storage 16 and expanding and executing the program in the memory 14, the CPU 12 functions as the respective functional structures of the description generation device 10, and the training processing illustrated in Fig. 11 is executed.

In step S10, the acquiring section 30 acquires the material list G and the clip series V that were inputted to the description generation device 10, and the training section 60 acquires the correct answer sentences Y' for the material list G and the clip series V that were inputted to the description generation device 10. Next, in step S12, the acquiring section 30 inputs the material list G to the material encoder 31 and acquires the initial material vectors $E^0$, and inputs the clip series V to the video encoder 32 and acquires the video vectors H.

Next, in step S14, the updating section 40 inputs the initial material vectors $E^0$ and the video vectors H to the state estimators 41. From the action embed F that was defined in advance, the state estimators 41 select the actions executed in clip $v^n$, and compute action vectors $f_n$ expressing the selected actions. Further, from the material vectors $E^{n-1}$, the state estimators 41 select the materials included in the clip $v^n$, and compute material vectors $e_n$ expressing the selected materials. Then, the state estimators 41 output the state estimation vectors $u_n$ = ($h_n$, $f_n$, $e_n$).

Next, in step S16, based on the selected actions and the material vectors, the state estimators 41 compute the updated material vectors $\hat{e}_m$ that express the state changes of the materials. Then, the state estimators 41 assign the updated material vectors $\hat{e}_m$ to the material vectors $E_m^n$, and transfer them to the (n+1)st processing that is next.

Next, in step S18, the generating section 50 inputs the state estimation vector $u_n$, which was outputted from the state estimator 41, to the corresponding nth description generator 51. The description generators 51 repeatedly generate descriptions $y^n$ of each of the step from the state estimation vectors $u_n$, and generate the description Y for all of the steps.

Next, in step S20, by the re-estimators 61, the training section 60 re-estimates the action vectors $f_n$ and the material vectors $E^{n-1}$ from the generated description Y and the initial material vectors $E^0$. Then, the training section 60 computes description generation loss $L_{sent}$, state estimation loss $L_{v\_sim}$ and re-estimation loss $L_{t\_sim}$, and computes the total loss $L_{total}$ (= $L_{sent}$ + $L_{v\_sim}$ + $L_{t\_sim}$). Then, the training section 60 updates the parameters of the state estimators 41, the description generators 51 and the re-estimators 61, respectively, so as to minimize the total loss Ltotai.

Next, in step S22, the training section 60 judges whether or not the training end condition is satisfied. If the end condition is not satisfied, the routine returns to step S14, and, if the end condition is satisfied, the routine moves on to step S24. In step S24, the training section 60 outputs the respective parameters of the state estimators 41, the description generators 51 and the re-estimators 61 of the time when the end condition was satisfied, and ends the training processing.

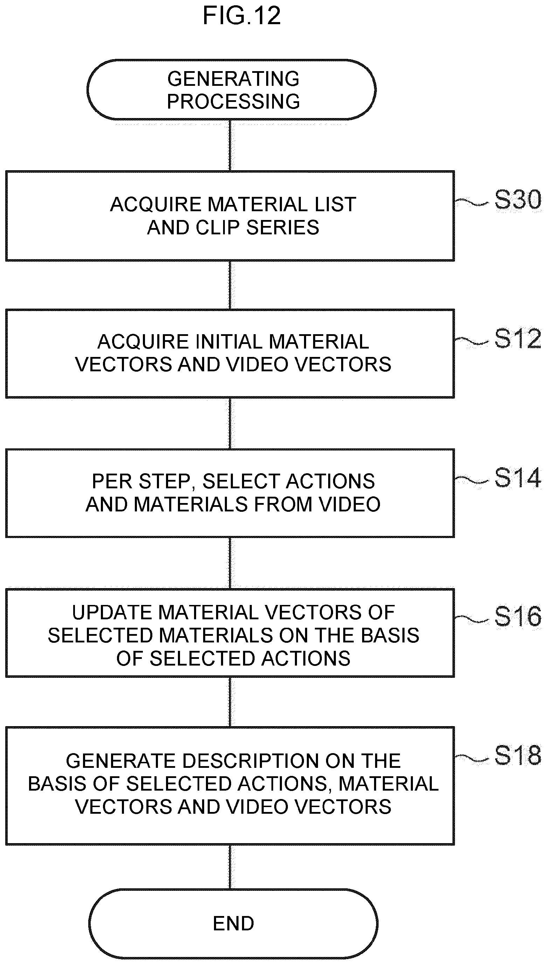

Fig. 12 is a flowchart illustrating the flow of the generating processing executed by the CPU 12 of the description generation device 10. Due to the CPU 12 reading-out the description generation program from the storage 16 and expanding and executing the program in the memory 14, the CPU 12 functions as the respective functional structures of the description generation device 10, and the generating processing illustrated in Fig. 12 is executed. Note that, before the generating processing starts, the parameters outputted in the training processing are set at the state estimators 41, the description generators 51 and the re-estimators 61, respectively.

In step S30, the acquiring section 30 acquires the material list G and the clip series V that were inputted to the description generation device 10 and are the target for generation of a description. Thereafter, in the same way as in the training processing, steps S12 through S18 are executed, and the description Y, which corresponds to the material list G and the clip series V that were acquired in above step S30, is generated and outputted, and the generating processing ends.

As described above, for a task that includes plural steps, the description generation device relating to the present embodiment acquires material characteristic amounts expressing respective materials used in the task, and video characteristic amounts extracted respectively from videos of each of the step that capture the task. Further, based on the respective video characteristic amounts of the videos of each of the step, the description generation device specifies actions with respect to the materials included in the videos of each of the step, and updates the material characteristic amounts of specified materials in accordance with the specified actions. At this time, the material characteristic amounts that are targets of updating are material characteristic amounts that have been updated with respect to the video of the previous step, in chronological order, of the steps of the task. Then, based on the updated material characteristic amounts, the specified actions and the video characteristic amounts, the description generation device generates a sentence that describes the task contents of each of the step. In order to accurately generate a description that describes the procedures of a task from video that captures that task, it is essential to track the state changes of the materials in the chronological order of the videos of each of the step. By updating the material characteristic amounts as described above, the description generation device of the present embodiment can generate sentences that describe the procedures of a task from a video that captures that task.

Note that the above embodiment describes a case in which, in the training of the model, the re-estimators also use results of re-estimating the state changes of the materials from the generated description. However, this structure is not essential, and the description generation device may be structured so as to not include the re-estimators. In this case, it suffices for the training section to make the total loss be $L_{total} = L_{sent} + L_{v\_sim}$.

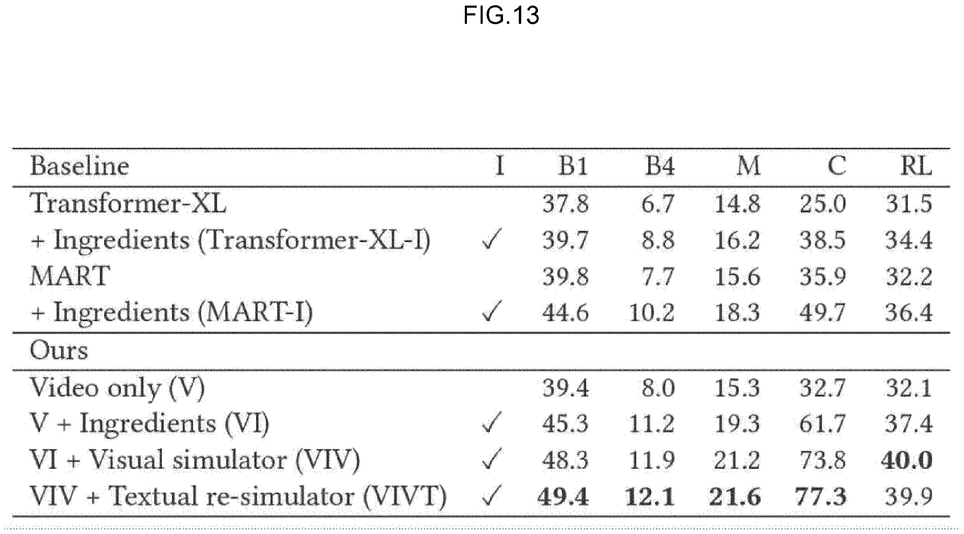

Here, the results of comparing the performances of the methods of the present disclosure and reference methods are described with reference to Fig. 13. In Fig. 13, the four "Baseline" methods and the "Video only (V)" and the "V + Ingredients (VI)" of the "Ours" are the reference methods, and the "VI + Visual simulator (VIV)" and the "VIV + Textual re-simulator (VIVT)" of the "Ours" are methods of the present disclosure. VIVT of the methods of the present disclosure is the method of the above-described embodiment, and VIV is a case that does not use results of re-estimation. V of the reference methods is a method using only the clip series of the present embodiment, and VI is a method that uses a material list in addition to V. Namely, in V and VI, estimation of state changes of the materials, i.e., updating of the material characteristic amounts, is not carried out. Further, in Fig. 13, Bi, $B_4$, M, C and RL are respectively scores of word redundancy evaluations, and B = BLEU, M = METEOR, C = CIDEr-D, RL = ROUGE-L. Further, the "Baseline" methods are not intrinsically methods that use a material list, but, in consideration of equality at the time of comparison with the methods of the present disclosure, include methods obtained by modifying conventional methods to use a material list. In Fig. 13, the methods that have a checkmark in the "I" column are methods using a material list. Further, in Fig. 13, the numerical values in bold are the maximum scores in the corresponding word redundancy evaluation.

As illustrated in Fig. 13, methods VIV and VIVT of the present disclosure greatly exceed the performances of the reference methods in all evaluations. Further, when comparing VI and VIV, VIV exhibits performances that are superior to those of VI, and VIVT improves the performances of VIV even more. This shows that both the estimation and the re-estimation of state changes are effective in generating sentences that accurately describe procedures.

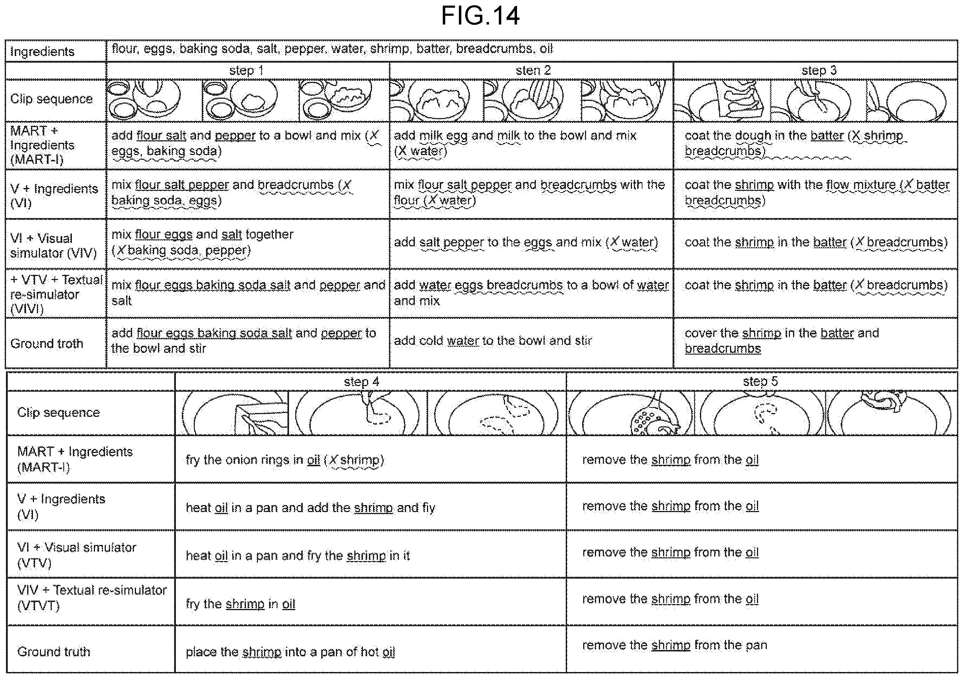

Further, Fig. 14 illustrates an example of results of generating description from a recipe video by the methods of the present disclosure and the reference methods, respectively. In Fig. 14, words that are underlined with a single line are materials coinciding with materials included in the correct answer sentences (Ground truth). Further, the words that are underlined with a wavy line are materials that do not coincide with materials included in the correct answer sentences, or are materials that are included in the correct answer sentences but are not included in the generated description.

As shown in Fig. 14, in reference method "MART-I", in steps 1 and 2 for example, an accurate description cannot be generated, such as "eggs" and "milk" are missing and the like. The same tendency appears in VI as well. In these methods, words expressing materials that are listed in the material list (Ingredients) are generated excessively. In VIV that is a method of the present disclosure, these problems are eliminated as in the case of "batter" in step 3 for example. Moreover, in VIVT that is a method that carries out re-estimation, words expressing materials that were left out in VIV such as, for example, "baking soda" and "pepper" in step 1 and "water" in step 2, can be generated.

Further, in the description generation device relating to the present disclosure, in the step of generating the description, material vectors, which are updated based on actions with respect to the materials, are acquired. Due thereto, after the training, not only generation of description, but also a simulation of the state changes of the materials is possible. Further, annotation with respect to intermediate states of materials, which is difficult work when carried out manually, can be carried out automatically without correct answer data.

Moreover, in order to describe the effects of being able to acquire updated material vectors, Fig. 15 illustrates an example in which material vectors are plotted in a vector space. Note that, in Fig. 15, in order to simplify explanation, multidimensional material vectors are projected into a two-dimensional space. The material vectors expressed by the light-shaded plots (the material vectors positioned mainly at the right side of the vector space) are the original material vectors, and the material vectors expressed by the dark-shaded plots (the material vectors positioned mainly at the left side) are the updated material vectors. As illustrated in Fig. 15, it can be understood that the original material vectors and the updated material vectors are clearly divided into two main clusters in the vector space.

Further, the loci of the materials were investigated (the enlarged portions of Fig. 15) by using the two, nearest, high-level material vectors acquired from the updated material vectors. Material vectors of similar states belong to the same cluster in the vector space, regardless of differences in recipe categories that are defined in advance for the materials included in the respective clips. For example, material vectors of "eggs", which have been updated by actions that are similar to "beat" such as, for example, "mix", "stir" and the like, exist near the material vector of "eggs" that has been updated by the action "beat". The same tendency is shown by "flour" as well.

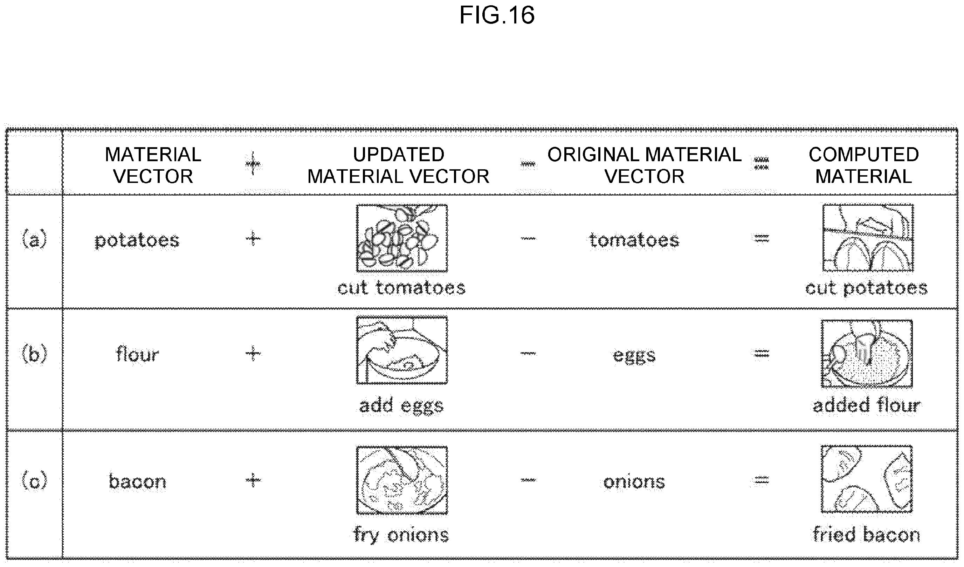

As illustrated in Fig. 16, material vectors such as those described above are vector expressions that can be added/subtracted. For example, as illustrated in (a) of Fig. 16, the state transition of the material is computed as v (cut potatoes) = v (potatoes) + v (cut tomatoes) - v (tomatoes). Here, v represents mapping to the vector space. Note that Fig. 16 illustrates cases in which the material vector that is the first term is an original material vector (a material vector that has not been updated), but the material vector of this term may be an updated material vector. For example, computation such as v (added chopped shallot) = v (chopped shallot) + v (add egg) - v (egg) also is possible.

The technique of the present disclosure is a technique that is effective, for example, in improving the searchability of image searches by text.

Note that, although the above embodiment describes a case in which the number of the material vectors $^e_m$ that are assigned to the material vectors $E^m$ is the same before and after the updating, the present disclosure is not limited to this. At least one of addition, deletion and merging of material vectors may be carried out on the material vectors $^e_m$ that are assigned to the material vectors $E^m$. Such processing may be realized by applying a memory network for example.

Further, the above embodiment describes a case in which, in the description of the specific example, the video is a recipe video (a video describing procedures of cooking), and the materials are ingredients and the like that are used in the cooking. However, the applicable range of the technique of the present disclosure is not limited to the above-described example. Application to videos of, for example, operations at factories, biochemical experiments, and the like also is possible. In the former case, the parts that are used in the task correspond to the materials in the above-described embodiment, and the assembling or the like of the parts corresponds to an action in the above-described embodiment. In the latter case, for example, a drug or a specimen corresponds to the material, and adding, stirring and the like correspond to actions.

Note that the above embodiment describes a case in which the description generation device that has the training function and the generating function is realized by a single computer, but the present disclosure not limited to this. The training device and the generation device may be realized by respectively different computers. In this case, it suffices to set a password, which is outputted from the training device, at the state estimators, the description generators and the re-estimators of the generation device.

Further, the description generating processing, which is executed by the CPU reading-in software (a program) in the above-described embodiment, may be executed by any of various types of processors other than a CPU. Examples of processors in this case include PLDs (Programmable Logic Devices) whose circuit structure can be changed after production such as FPGAs (Field-Programmable Gate Arrays) and the like, and dedicated electrical circuits that are processors having circuit structures that are designed for the sole purpose of executing specific processings such as ASICs (Application Specific Integrated Circuits) and the like, and the like. Further, the above-described description generating processing may be executed by one of these various types of processors, or may be executed by a combination of two or more of the same type or different types of processors, e.g., plural FPGAs, or a combination of a CPU and an FPGA, or the like. Further, the hardware structures of these various types of processors are, more specifically, electrical circuits that combine circuit elements such as semiconductor elements and the like.

Further, the above embodiment describes an aspect in which the description generation program is stored in advance (is installed) in a storage, but the present disclosure is not limited to this. The program may be provided in a form of being stored on a storage medium such as a CD-ROM, a DVD-ROM, a flexible disc, a USB memory or the like. Further, the program may be in a form of being downloaded over a network from an external device.

Explanation of Reference Numerals

| | |
|---|---|
| 10 | description generation device |
| 12 | CPU |
| 14 | memory |
| 16 | storage |
| 18 | input device |
| 20 | output device |
| 22 | storage medium reader |

| 24 | communication I/F |
| 26 | bus |
| 30 | acquiring section |
| 31 | material encoder |
| 32 | video encoder |
| 40 | updating section |
| 41, 41A, 41B, 41C | state estimator |
| 50 | generating section |
| 51, 51A, 51B, 51C | description generator |
| 60 | training section |
| 61, 61A, 61B, 61C | re-estimator |
| 62 | sentence encoder |
| 63 | estimator |

**Claims**

1. A description generation device, comprising:

   an acquiring section configured to acquire, for a task including a plurality of steps, material characteristic amounts expressing respective materials used in the task, and video characteristic amounts extracted from respective videos of each of the steps that capture the task;
   an updating section configured to, based on the video characteristic amounts of the respective videos of each of the steps, specify actions with respect to materials that are included in the videos of each of the steps, and updates the material characteristic amounts of specified materials in accordance with specified actions; and
   a generating section configured to, based on the updated material characteristic amounts, the specified actions and the video characteristic amounts, generate sentences describing procedures of the task for each of the steps.

2. The description generation device of claim 1, wherein the updating section is configured to use, as the material characteristic amounts that are targets of updating, material characteristic amounts that have been updated with respect to a video of a previous step, in chronological order of the steps in the task.

3. The description generation device of claim 1 or claim 2, wherein the updating section is configured to carry out at least one of addition, deletion or merging of material characteristic amounts with respect to the updated material characteristic amounts.

4. The description generation device of claim 1 or claim 2, wherein:

   the updating section is configured to specify actions from video characteristic amounts, and update the material characteristic amounts by using a first model that has been trained in advance so as to update the material characteristic amounts based on of specified actions, and
   the generating section is configured to generate the sentences by using a second model that has been trained in advance so as to generate sentences describing procedures of the task for each of the steps, based on material characteristic amounts, actions and video characteristic amounts.

5. The description generation device of claim 4, comprising a training section configured to train the first model and the second model by using, as training data, a material list and videos for each of the steps, and sentences of correct answers that correspond to the material list and the videos for each of the steps.

6. The description generation device of claim 5, wherein the training section is configured to train the first model and the second model so as to minimize a total loss that includes a first loss, which is based on comparison of sentences generated by the generating section and the sentences of the correct answers, and a second loss, which is based on comparison of the actions and the material characteristic amounts specified at the updating section, and actions and materials of correct answers included in the videos for each of the steps.

7. The description generation device of claim 6, wherein the training section is configured to acquire the actions and the materials of the correct answers by carrying out language analysis on the sentences of the correct answers.

8. The description generation device of claim 6, wherein the training section is configured to train the first model, the second model and a third model so as to minimize the total loss, which further includes a third loss that is based on a comparison of output of the third model, which has been trained in advance so as to estimate material characteristic amounts and actions from sentences generated by the generating section, and the actions and the materials of the correct answers.

9. A description generation method executed by a computer, wherein:

an acquiring section installed in the computer acquires, for a task including a plurality of steps, material characteristic amounts expressing respective materials used in the task, and video characteristic amounts extracted from respective videos of each of the steps that capture the task,
based on the video characteristic amounts of the respective videos of each of the steps, an updating section installed in the computer specifies actions with respect to materials that are included in the videos of each of the steps, and updates the material characteristic amounts of specified materials in accordance with specified actions, and
a generating section installed in the computer generates sentences describing procedures of the task for each of the steps, based on the updated material characteristic amounts, the specified actions and the video characteristic amounts.

10. A description generation program for causing a computer to function as:

an acquiring section acquiring, for a task including a plurality of steps, material characteristic amounts expressing respective materials used in the task, and video characteristic amounts extracted from respective videos of each of the steps that capture the task;
an updating section that, based on the video characteristic amounts of the respective videos of each of the steps, specifies actions with respect to materials that are included in the videos of each of the steps, and updates the material characteristic amounts of specified materials in accordance with specified actions; and
a generating section that, based on the updated material characteristic amounts, the specified actions and the video characteristic amounts, generates sentences describing procedures of the task for each of the steps.

# FIG.1

MATERIAL LIST

| butter | eggs | cheese |

**CLIP SERIES**

STEP 1

STEP 2

STEP 3

**STATE CHANGES**

added

cracked stirred

added stirred

**DESCRIPTION**

add the butter into a pan

crack the eggs and stir

add the eggs mixture and cheese and stir

EP 4 411 589 A1

# FIG.2

# FIG.3

CORRECT
ANSWER
SENTENCES

MATERIAL LIST
CLIP SERIES

10

60

30

ACQUIRING SECTION

40

TRAINING
SECTION

UPDATING SECTION

50

GENERATING SECTION

DESCRIPTION

**FIG.4**

EP 4 411 589 A1

# FIG.5

MATERIAL LIST G

MATERIAL
VECTORS $E^0$

1. butter

2. eggs

3. cheese

31

$e_1^0$

$e_2^0$

$e_3^0$

# FIG.6

CLIP SERIES V

STEP 1

STEP 2

STEP 3

32

VIDEO VECTORS H

$h_1$

$h_2$

$h_3$

FIG.7

MATERIAL VECTORS $E^{n-1}$

$e_1^{n-1}$
$e_2^{n-1}$
$e_3^{n-1}$

(2) MATERIAL SELECTION

$a^n$

Clip attention
Recurrent attention

$\times$ $e_1^{n-1}$
$\times$ $e_2^{n-1}$
$\times$ $e_3^{n-1}$

$\Sigma$

$\overline{e}_n$

VIDEO VECTOR H

$h_n$

MLP

$w_p$

F

$\times$ $f_{crack}$
$\times$ $f_{add}$
$\times$ $f_{boil}$
$\times$ $f_{stir}$

$\Sigma$

$\overline{f}_n$

(1) ACTION SELECTION

(3) UPDATING

Bilinear

$l_n$

Update gate

$\hat{e}_1$
$\hat{e}_2$
$\hat{e}_3$

41

STATE ESTIMATION VECTOR $u_n$

$h_n$
$\overline{f}_n$
$\overline{e}_n$

Next step

EP 4 411 589 A1

# FIG.8

STATE
ESTIMATION VECTOR

GENERATED
DESCRIPTION Y

51

$u_1$

$u_2$

$u_3$

$y^1$

$y^2$

$y^3$

# FIG.9

MATERIAL VECTORS $E^0$

$e_1^0$   $e_2^0$   $e_3^0$

butter   eggs   cheese

63

GENERATED SENTENCES

STEP 1 : add···

STEP 2 : crack···

STEP 3 : add···

62

SENTENCE VECTORS

$s_1$

$s_2$

$s_3$

added

cracked stirred

added stirred

# FIG.10

CORRECT ANSWER
SENTENCES Y'

STEP 1 : add・・・

STEP 2 : crack・・・stir・・・  $\longleftrightarrow$  $L_{sent}$

STEP 3 : add・・・

GENERATED
DESCRIPTION

STEP 1 : add・・・

STEP 2 : crack・・・

STEP 3 : add・・・

RE-ESTIMATED STATE
CHANGES OF MATERIALS

| butter | eggs | cheese |
| --- | --- | --- |

added

cracked
stirred

added
stirred

$L_{t\_sim}$

MATERIAL
LABELS

| 1 |
| 1 |
| 1 |

$\longleftrightarrow$

$a^n$

$L_{v\_sim}$

ACTION
LABELS

| 0 |
| 1 |
| 0 |
| 1 |

$\longleftrightarrow$

$w_p$

EP 4 411 589 A1

## FIG.11

```
┌─────────────────────────────┐
│     TRAINING PROCESSING      │
└─────────────────────────────┘
                │
┌─────────────────────────────┐
│ ACQUIRE MATERIAL LIST AND    │ ～ S10
│ CLIP SERIES,                 │
│ AND CORRECT ANSWER SENTENCES │
└─────────────────────────────┘
                │
┌─────────────────────────────┐
│    ACQUIRE INITIAL MATERIAL  │ ～ S12
│   VECTORS AND VIDEO VECTORS  │
└─────────────────────────────┘
                │
                ▼
┌─────────────────────────────┐
│    PER STEP, SELECT ACTIONS  │ ～ S14
│    AND MATERIALS FROM VIDEO  │
└─────────────────────────────┘
                │
┌─────────────────────────────┐
│   UPDATE MATERIAL VECTORS OF │ ～ S16
│      SELECTED MATERIALS      │
│ ON THE BASIS OF SELECTED     │
│          ACTIONS             │
└─────────────────────────────┘
                │
┌─────────────────────────────┐
│    GENERATE DESCRIPTION      │ ～ S18
│ ON THE BASIS OF SELECTED     │
│ ACTIONS,                     │
│ MATERIAL VECTORS AND VIDEO   │
│ VECTORS                      │
└─────────────────────────────┘
                │
┌─────────────────────────────┐
│ UPDATE PARAMETERS SO AS TO   │ ～ S20
│ MINIMIZE                     │
│ LOSS BASED ON ERRORS BETWEEN │
│      RESPECTIVE OUTPUTS      │
│      AND CORRECT ANSWERS     │
└─────────────────────────────┘
                │
        NO    ◇ END TRAINING? ◇   S22
                │ YES
┌─────────────────────────────┐
│      OUTPUT PARAMETERS       │ ～ S24
└─────────────────────────────┘
                │
┌─────────────────────────────┐
│             END              │
└─────────────────────────────┘
```

# FIG.12

GENERATING
PROCESSING

ACQUIRE MATERIAL LIST
AND CLIP SERIES — S30

ACQUIRE INITIAL MATERIAL
VECTORS AND VIDEO VECTORS — S12

PER STEP, SELECT ACTIONS
AND MATERIALS FROM VIDEO — S14

UPDATE MATERIAL VECTORS OF
SELECTED MATERIALS ON THE BASIS
OF SELECTED ACTIONS — S16

GENERATE DESCRIPTION ON THE
BASIS OF SELECTED ACTIONS, MATERIAL
VECTORS AND VIDEO VECTORS — S18

END

FIG.13

| Baseline | I | B1 | B4 | M | C | RL |
|---|---|---|---|---|---|---|
| Transformer-XL | | 37.8 | 6.7 | 14.8 | 25.0 | 31.5 |
| + Ingredients (Transformer-XL-I) | ✓ | 39.7 | 8.8 | 16.2 | 38.5 | 34.4 |
| MART | | 39.8 | 7.7 | 15.6 | 35.9 | 32.2 |
| + Ingredients (MART-I) | ✓ | 44.6 | 10.2 | 18.3 | 49.7 | 36.4 |
| Ours | | | | | | |
| Video only (V) | | 39.4 | 8.0 | 15.3 | 32.7 | 32.1 |
| V + Ingredients (VI) | ✓ | 45.3 | 11.2 | 19.3 | 61.7 | 37.4 |
| VI + Visual simulator (VIV) | ✓ | 48.3 | 11.9 | 21.2 | 73.8 | **40.0** |
| VIV + Textual re-simulator (VIVT) | ✓ | **49.4** | **12.1** | **21.6** | **77.3** | 39.9 |

FIG.14

| Ingredients | flour, eggs, baking soda, salt, pepper, water, shrimp, batter, breadcrumbs, oil | | |
|---|---|---|---|
| | step 1 | sten 2 | step 3 |
| Clip sequence | | | |
| MART + Ingredients (MART-I) | add flour salt and pepper to a bowl and mix (X eggs, baking soda) | add milk egg and milk to the bowl and mix (X water) | coat the dough in the batter (X shrimp breadcrumbs) |
| V + Ingredients (VI) | mix flour salt pepper and breadcrumbs (X baking soda, eggs) | mix flour salt pepper and breadcrumbs with the flour (X water) | coat the shrimp with the flow mixture (X batter breadcrumbs) |
| VI + Visual simulator (VIV) | mix flour eggs and salt together (X baking soda, pepper) | add salt pepper to the eggs and mix (X water) | coat the shrimp in the batter (X breadcrumbs) |
| + VTV + Textual re-simulator (VIVI) | mix flour eggs baking soda salt and pepper and salt | add water eggs breadcrumbs to a bowl of water and mix | coat the shrimp in the batter (X breadcrumbs) |
| Ground troth | add flour eggs baking soda salt and pepper to the bowl and stir | add cold water to the bowl and stir | cover the shrimp in the batter and breadcrumbs |

| | step 4 | step 5 |
|---|---|---|
| Clip sequence | | |
| MART + Ingredients (MART-I) | fry the onion rings in oil (X shrimp) | remove the shrimp from the oil |
| V + Ingredients (VI) | heat oil in a pan and add the shrimp and fly | remove the shrimp from the oil |
| VI + Visual simulator (VTV) | heat oil in a pan and fry the shrimp in it | remove the shrimp from the oil |
| VIV + Textual re-simulator (VTVT) | fry the shrimp in oil | remove the shrimp from the oil |
| Ground truth | place the shrimp into a pan of hot oil | remove the shrimp from the pan |

EP 4 411 589 A1

EP 4 411 589 A1

FIG.15

## FIG.16

| | MATERIAL VECTOR | + | UPDATED MATERIAL VECTOR | − | ORIGINAL MATERIAL VECTOR | = | COMPUTED MATERIAL |
|---|---|---|---|---|---|---|---|
| (a) | potatoes | + | cut tomatoes | − | tomatoes | = | cut potatoes |
| (b) | flour | + | add eggs | − | eggs | = | added flour |
| (c) | bacon | + | fry onions | − | onions | = | fried bacon |

| INTERNATIONAL SEARCH REPORT | International application No. |
|---|---|
| | **PCT/JP2022/035263** |

**A. CLASSIFICATION OF SUBJECT MATTER**

*G06F 40/56*(2020.01)i; *G06F 16/783*(2019.01)i; *G06F 40/44*(2020.01)i
FI: G06F40/56; G06F16/783; G06F40/44

According to International Patent Classification (IPC) or to both national classification and IPC

**B. FIELDS SEARCHED**

Minimum documentation searched (classification system followed by classification symbols)

G06F40/20-40/58; G06F16/00-16/958; G06N3/00-99/00; G06T7/00-7/90; G0V10/00-40/20

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | 西村太一他4名. 手順構造を考慮した作業映像からの手順書生成. 言語処理学会第27回年次大会 発表論文集. [online], 08 March 2021, pp. 992-996, non-official translation (NISHIMURA, Taichi et al. Process Manual Generation from Work Videos with Consideration for Process Structure. Proceedings of the 27th Annual Meeting of the Natural Language Processing Society.)<br>entire text, all drawings | 1-10 |
| A | 藤井竜希他3名. 深層学習を用いた料理動画からの全体的な整合性を考慮したレシピ文の自動生成. 電子情報通信学会技術研究報告. [online], 30 November 2018, vol. 118, no. 350, pp. 37-41, AI2018-32, (FUJII, Tatsuki et al. Generation of Curriculum-Based Multiple Choice Questions Using Linked Data. IEICE Technical Report.)<br>entire text, all drawings | 1-10 |
| A | US 2021/0118447 A1 (LG ELECTRONICS INC.) 22 April 2021 (2021-04-22)<br>entire text, all drawings | 1-10 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 October 2022** | **01 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
**Information on patent family members**

International application No.

**PCT/JP2022/035263**

| Patent document cited in search report | Publication date (day/month/year) | Patent family member(s) | Publication date (day/month/year) |
|---|---|---|---|
| US 2021/0118447 A1 | 22 April 2021 | KR 10-2021-0046170 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ANTOINE BOSSELUT ; OMER LEVY ; ARI HOLTZMAN ; CORIN ENNIS ; DIETER FOX ; YEJIN CHOI.** SINIULATING ACTION DYNAMICS WITH NEURAL PROCESS NETWORKS. *ICLR2018*

- **JIE LEI ; LIWEI WANG ; YELONG SHEN ; DONG YU ; TAMARA L. BERG ; MOHIT BANSAL.** MART: Memory-Augmented Recurrent Transformer for Coherent Video Paragraph Captioning. *arXiv:2005.05402v1,* 11 May 2020